# EUROPÄISCHE PATENTSCHRIFT

(11) **EP 2 182 200 B1**
(45) Veröffentlichungstag und Bekanntmachung des Hinweises auf die Patenterteilung: **11.02.2015**
(21) Anmeldenummer: 09013190.5
(22) Anmeldetag: 20.10.2009
(51) Int. Cl.: F03B 15/04, F03B 15/06, F03B 15/16, H02P 9/48, F03B 13/10, F03B 17/06

(54) **Verfahren und Vorrichtung für die Leistungsregelung eines Unterwasserkraftwerks**
Method and device for controlling the power of a submerged water power station
Procédé et dispositif pour le contrôle de la puissance d'une centrale électrique submergée

(30) Priorität: 29.10.2008 DE 102008053732
(43) Veröffentlichungstag der Anmeldung: 05.05.2010
(73) Patentinhaber: Voith Patent GmbH, 89522 Heidenheim (DE)
(72) Erfinder: Arlitt, Raphael, Dr., 89077 Ulm (DE); Hölle, Michael, 89555 Söhnstetten (DE)
(74) Vertreter: Schmidt, Sven Hendrik

(56) Entgegenhaltungen:
- EP-A2- 0 739 087
- DE-A1- 3 601 289
- US-A1- 2003 218 338
- US-A1- 2005 012 339

## Beschreibung

Die Erfindung betrifft ein Verfahren und eine Vorrichtung für die Leistungsregelung eines Unterwasserkraftwerks mit den oberbegrifflichen Merkmalen der unabhängigen Ansprüche.

Unterwasserkraftwerke, die ohne Dammstrukturen freistehend in einer Umgebungsströmung mittels einer Wasserturbine kinetische Energie aufnehmen, um einen direkt gekoppelten elektrischen Generator anzutreiben, sind bekannt und dienen insbesondere zur Ausnutzung von Gezeitenströmungen zur Gewinnung elektrischer Energie. Dabei wird meist eine propellerförmig ausgebildete Wasserturbine, die an einer fundamentierten oder schwimmfähigen Tragstruktur gehaltert ist, zur Aufnahme kinetlscher Energie aus der Umgebungsströmung verwendet. Für eine einfache Gestaltung eines solchen Unterwasserkraftwerks ist die Wasserturbine direkt an einen elektrischen Generator angekoppelt, Denkbar ist auch die Zwischenschaltung eines Getriebes zur Übersetzung der Turbinendrehzahl ins Schnelle. In beiden Fällen besteht eine Proportionalität der Umlaufgeschwindigkeit der Wasserturbine und der Drehzahl des elektrischen Generators, wobei mittels des elektrischen Generators eine Drehzahlführung der Wasserturbine ausgeführt werden kann.

Für die Leistungsregelung eines gattungsgemäßen Unterwasserkraftwerks Ist für langsame bis mittlere Anströmungsgeschwindigkelten die Anlagenleistung zu maximieren, Dabei wird, bei einer wirtschaftlichen Auslegung der Anlage, oberhalb einer bestimmten Nennleistung eine Leistungsbegrenzung vorgenommen,

Ausgehend von den voranstehend genannten Regelungsanforderungen wurde bisher für einen leistungsoptlmierten Anlagenbetrieb eine Kennlinlensteuerung verwendet, die ausgehend von einer Vermessung der Anlageneharakteristik einer bestimmten Anströmungsgeschwlndigkeit eine optimale Schnelllaufzahl zuordnet, für die ein optimaler Leistungsbeiwert und damit eine maximale mechanische Leistungsaufnahme vorliegt. Voraussetzung für diese Art der Steuerung ist, neben den als bekannt vorausgesetzten Kennlinien der Anlage, eine hinreichend genaue Vermessung der Anströmungscharakterlstik. Hierfür ist ein separates Strömungsgeschwlndigkeitsmesssystem notwendig, das eine mit einer gewissen Ausfallwahrscheinlichkeit behaftete Systemkomponente darstellt. Des Weiteren Ist eine Vermessung der auf die Wasserturbine wirkenden Anströmung aufgrund örtlicher Strömungsunterschiede problematisch. Ferner ist zu beachten, dass das Strömungsmesssystem zwar hinreichend nahe an der Wasserturbine anzuordnen ist, um übereinstimmend zur Wasserturbine angeströmt zu werden, Jedoch zugleich ein solcher Abstand von der Wasserturbine eingehalten werden muss, dass deren Umlauf die Vermessung des Strömungsfelds nicht wesentlich beeinflusst.

Ein weiterer Nachteil eines kennlinienbasierten Verfahrens ist darin zu sehen, dass im Laufe des Alterungsprozesses der Anlage, beispielsweise durch einen Bewuchs oder den Verschleiß mechanischer Komponenten, Insbesondere der Lagerung der umlaufenden Einheit, eine Abweichung von den ursprünglich vermessenen, die Steuerungsgrundlage bildenden Kennlinien auftreten kann.

Zur Verbesserung der voranstehend dargelegten Problematik wurde für hydraulisch angetriebene Maschinensätze eine Verfeinerung einer kennlinlenbasierten Drehzahl-Sollwertvorgabe für Wasserturbinen durch einen Suchalgorithmus für das Leistungsoptimum vorgeschlagen. Hierzu wird auf die DE 3601289 A1 und EP 0230636 B1 verwiesen. Für das Auffinden des Leistungsmaximums wird auf die Drehzahlführung eine zeitliche Variation für die Stellgröße aufgeschaltet und die sich als Folge ergebenden Leistungsschwankungen analysiert, Dabei werden inkrementelle Korrekturwerte dem Drehzahlsollwert so sukzessiv aufgeschaltet, dass eine optimale Wirkleistung an ein elektrisches Verbundnetz vom Maschinensatz abgegeben wird. Ein solcher Regler ist unter dem Begriff Maximum-Power-Point-Regier (MPP-Regier) bekannt.

Nachteilig bei der Verwendung eines MPP-Reglers zur Drehzahlführung ist, dass Insbesondere Fluktuationen der Anströmungsgeschwlndigkeit die systematisch bedingten Leistungsvariationen des Suchverfahrens derart störend überlagern, das die Leistungsoptimierung erschwert wird, Ferner ist bei stark schwankenden Anströmungsverhältnissen, die für ein Gezeitenkraftwerk bei hohem Seegang und Turbulenzen in der Strömung auftreten können, die Drehzahlführung für die Leistungsregelung nachteilig, da die Drehzahl- und Leistungsanpassung vielfach nicht hinreichend schnell erfolgt, sodass das Unterwasserkraftwerk einem hohen Momenteneintrag standhalten muss, der nur teilweise für die Gewinnung elektrischer Energie zur Verfügung steht.

Zur Ausführung der Leistungsregelung unter Voraussetzung einer Begrenzung des Leistungseintrags kann mittels einer Blattwinkelverstellung eine Veränderung der Kennliniencharakteristik der Anlage bewirkt werden. Werden stattdessen die Rotorblätter der Wasserturbine mit einem festen Einbauwinkel versehen, kann für den leistungsbegrenzten Betriebsbereich durch eine Verlangsamung beziehungsweise eine Beschleunigung der Wasserturbine ein Arbeitspunkt außerhalb des Leistungsoptimums angefahren werden. Besonders kritisch ist für diesen leistungsbegrenzten Betriebsbereich die hinreichend genaue Bestimmung der tatsächlichen Anströmung an der Wasserturbine.

Der Erfindung liegt die Aufgabe zugrunde, eine Leistungsregelung für ein Unterwasserkraftwerk anzugeben, die die voranstehend dargelegten Probleme überwindet. Dabei ist ein robustes Regelungsverfahren notwendig, das eine sichere Anlageführung gewährleistet. Gleichzeitig sollte die Regelung hinreichend dynamisch sein, um auch eine Anströmung mit hoher Geschwindigkeitsfluktuation effizient in elektrische Energie umsetzen zu können. Ferner sollte die erfindungsgemäße Vorrichtung zu einem System führen, das einen Betrieb ohne externe Sensorik ermöglicht, Insbesondere sollte die Vermessung der Anströmungscharakteristik an der Wasserturbine keine Voraussetzung des Regelungsverfahrens darstellen. Ferner solite ein sicheres Anlaufen und Stillsetzen des Unterwasserkraftwerks gegeben sein.

Die der Erfindung zugrunde liegende Aufgabe wird durch die Merkmale der unabhängigen Ansprüche gelöst. Dabei haben die Erfinder erkannt, dass für den leistungsoptlmierten Betrieb eines gattungsgemäßen Unterwasserkraftwerks eine sensorfreie, auf einer Momentenführung beruhende Regelung verwendet werden kann, die durch die Vorgabe des vom elektrischen Generator erzeugten Lastmoments realisiert wird. Die Drehzahl der Wasserturbine wird nicht vorgegeben. Diese stellt sich frei in Abhängigkeit der Massenträgheiten der umlaufenden Anlagenkomponenten und der an der Anlage wirkenden hydrodynamischen Momente, Bremsmomente und dem vorgegebenen Lastmoment auf der elektrischen Anlagenseite ein.

Zur Festlegung des Sollwerts für das Lastmoment am elektrischen Generator kann ein Zustandsregler verwendet werden. Durch die Verwendung von Beobachtern und auf Grundlage eines Streckenmodells wird für eine bevorzugte Ausgestaltung auf externe Sensoren verzichtet und lediglich die generatorseitlgen Ausgangsgrößen zur Zustandsbestlmmung herangezogen. Werden dennoch externe Sensoren zur Ermittlung der Zustandsgrößen vorgesehen, besteht die Möglichkeit mittels eines Störgrößenmodells Messwerte zu korrigieren und ferner durch eine Störgrößenaufschaltung die Regelung zu verbessern. Alternativ wird eine Einrichtung zur Suche des Leistungsmaximums verwendet, wobei zu diesem Zweck ein MPP-Regler bevorzugt wird, der die Sollwertvorgabe für das Lastmoment am elektrischen Generator mit eine zeitlichen Variation ausgibt, um aus den resultierenden Schwankungen der Generatorleistung einen leistungsoptimalen Sollwert zu bestimmen. Hierzu kann das Lastmoment zeltdiskret in inkrementellen Schritten variiert werden oder es findet eine kontinuierliche Variation statt. Dabei ist insbesondere ein mit einer langsamen Frequenz moduliertes, oszillierendes Lastmoment denkbar.

Aufgrund der Vorgabe des Lastmoments des elektrischen Generators kann eine durch eine Fluktuation der Anströmung verursachte Veränderung des aufgenommenen hydrodynamischen Moments an der Wasserturbine zunächst durch die Veränderung der Umlaufgeschwindigkeit der rotierenden Massen abgefangen werden, bis die Nachführung zu einem neuen Arbeitspunkt mittels des MPP-Reglers bewirkt wird. Hierdurch entsteht eine dynamische Leistungsregelung und zugleich ein Momentenstöße abfederndes, weiches Systemverhalten.

Des Weiteren kann die auf dem Lastmoment des elektrischen Generators basierende Regelung vorteilhaft für einen zweiten, leistungsbegrenzten Betriebsbereich verwendet werden, für den hohe Anströmungsgeschwindigkeiten an der Wasserturbine vorliegen. Hierzu wird das Lastmoment so eingestellt, dass die Wasserturbine zu einem vom Leistungsoptlmum entfernten Arbeitspunkt geführt wird. Denkbar Ist die Verlangsamung der Wasserturbine bis zum Strömungsabriss. Bevorzugt wird jedoch die Wasserturbine zur Leistungsbegrenzung in den Schnelllaufbereich oberhalb der leistungsoptimalen Drehzahl geführt. Besonders bevorzugt erfolgt eine Abregelung der Anlage auf eine im Wesentlichen konstante Nennleistung. Dabei kann jeder durch die Wasserturbine aufgenommenen hydraulischen Leistung ein bestimmtes Lastmoment am elektrischen Generator zugeordnet werden, wobei bevorzugt die Einregelung der Leistungsbeschränkung mittels eines MPP-Reglers ausgeführt wird.

Nachfolgend wird die Erfindung anhand von bevorzugten Ausführungsbeispielen und In Verbindung mit Figurendarstellungen genauer erläutert. In diesen ist im Einzelnen Folgendes dargestellt:
- Figur 1: zeigt schematisch vereinfacht eine erfindungsgemäße Vorrichtung zur Lelstungsregelung.
- Figur 2: verdeutlicht anhand von Turbinenmoment-Kennlinien das erfindungsgemäße Verfahren.

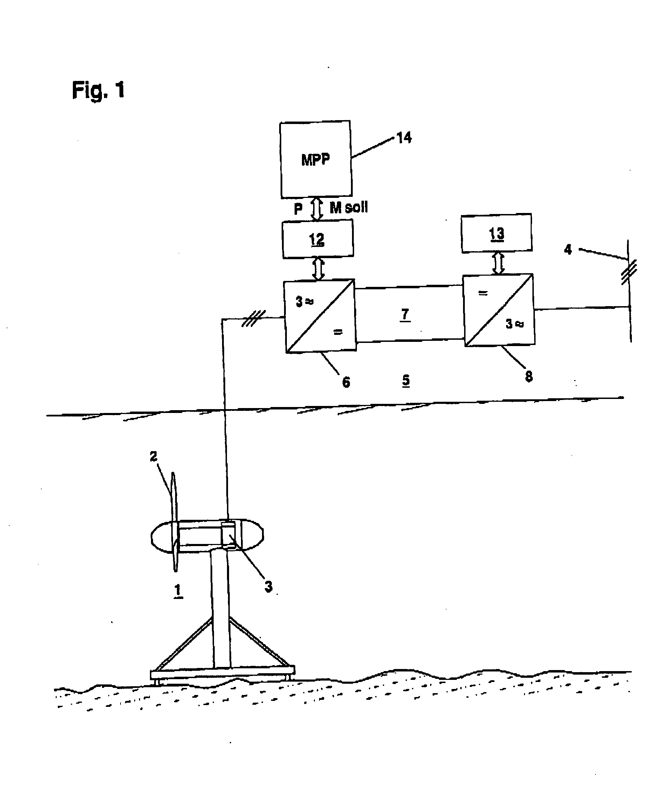

Figur 1 zeigt eine mögliche Ausgestaltung eines gattungsgemäßen Unterwesserkraftwerks 1 mit einer erfindungsgemäßen Vorrichtung zur Lelstungsregelung. Dabei umfasst das Unterwasserkraftwerk 1 eine Wasserturbine 2 und einen elektrischen Generator 3, der vorliegend direkt mit der Wasserturbine 2 gekoppelt ist und somit mit dieser drehzahlstarr verbunden ist.

Zur Einspeisung der vom elektrischen Generator 3 erzeugten elektrischen Leistung in ein Verbundnetz 4 mit konstanter Netzfrequenz wird ein Frequenzumrichter 5 verwendet, der vorliegend einen generatorseitigen Umrichter 6, einen Gleichspannungszwlschenkreis 7 und einen netzseitigen Umrichter 8 umfasst. Für die dargestellte Ausgestaltung ist zur Regelung des Frequenzumrichters 5 ein erster Regler 12 vorgesehen, der dem generatorseitigen Umrichter 6 zugeordnet ist, sowie ein zweiter Regler 13 für den netzseitigen Umrichter 8. Im einfachsten Fall arbeiten die beiden Regler voneinander unabhängig, wobei der erste Regler 12 für den generatorseitigen Umrichter 6 das Lastmoment am elektrischen Generator 3 festlegt und der zweite Regler 13 für den netzseltigen Umrichter 8 die Spannung im Gleichspannungszwischenkreis 7 stabilisiert, Der erste Regler 12 und der zweite Regler 13 sind typischerweise in die jeweiligen Umrichter 6, 8 integriert.

Dabei bestimmt die Einrichtung zur Suche des Leistungsmaximums 14, Im Ausführungsbeispiel ein MPP-Regler, aus den am ersten Regler 12 für den generatorseitigen Umrichter 6 vorliegenden Leistungsdaten P des elektrischen Generators 3 eine Sollwertvorgabe für das Lastmoment Mₛₒₗₗ und gibt diese an den ersten Regler 12 zurück, wobei der Sollwert zeitlich variiert. Ausgehend vom vorgegebenen Sollwert für das Lastmoment Mₛₒₗₗ regelt und/oder steuert der generatorseitige Umrichter 6 den Laststrom am elektrischen Generator 3 des Unterwasserkraftwerks. Wird als elektrischer Generator 3 eine permanentmagneterregte Synchronmaschine verwendet, kann der Laststrom und als Folge das Lastmoment durch eine Regelung oder Steuerung der Statorspannungskomponenten d, q im 2-Achsensystem der Synchronmaschine eingestellt werden.

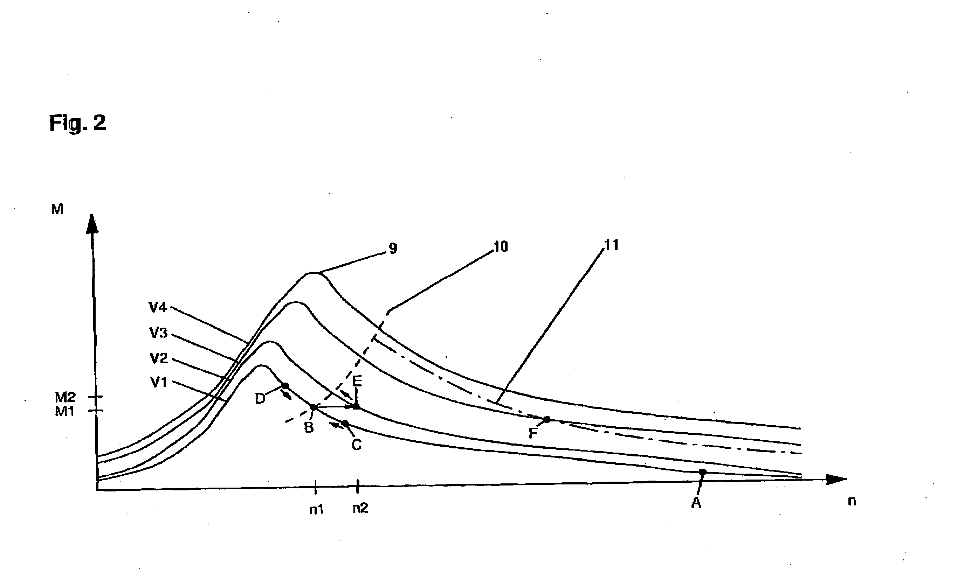

Anhand von Figur 2 lässt sich die Festlegung des lelstungsoptimalen Lastmoments durch den MPP-Regler erläutern, Skizzenhaft dargestellt und schematisch vereinfacht ist eine mit den Anströmungsgeschwindigkelten V₁ - V₄ parametrisierte Kennlinlenschar dargestellt, die den Zusammenhang des von der Wasserturbine 2 aufgenommenen hydraulischen Moments M und der Drehzahl n der Wasserturbine darstellt. Mit der gestrichelten Linie ist die Lage des leistungsoptimalen Drehmoments 10 angedeutet, das gegenüber den Maxima der hydrodynamischen Momente 9 zu höheren Drehzahlen hin verlagert Ist.

Für die der Kennlinle V₁ zugeordneten Anströmungsverhältnisse liegt im Arbeitspunkt B das Leistungsoptimum vor, dem das Moment M₁ zugeordnet Ist. Um diesen Arbeitspunkt B aufzufinden wird vom MPP-Regler zunächst ein erster, vorliegend zu niedrig gewählter Sollwert für das Lastmoment Mₛₒₗₗ vorgegeben, sodass die Wasserturbine nach dem Abklingen der dynamischen Effekte zum Arbeitspunkt C gelangt, der gegenüber dem leistungsoptlmalen Arbeitspunkt B zum Schneillaufbereich hin verschoben ist. Eine Variation des Sollwerts für das Lastmoment Mₛₒₗₗ führt sodann zu einer Systemantwort auf der vom elektrischen Generator 2 ausgegebenen elektrischen Leistung, sodass sich ein zugeordneter Leistungsgradient als Funktion des Lastmoments ermitteln lässt und der MPP-Regler eine inkrementelle Anpassung des Lastmoments am elektrischen Generator 2 bewirkt, bis der leistungsoptimale Arbeitspunkt B erreicht ist. Entsprechendes mit umgekehrten Vorzeichen gilt für den Arbeitspunkt D, für den der MPP-Regler zunächst gegenüber dem leistungsoptlmalen Wert ein zu hohes Lastmoment ansetzt, das sukzessive bis zum Arbeitspunkt B reduziert wird.

Ferner ist aus Figur 2 der Fall ersichtlich, dass ein Anstieg der Anströmungsgeschwindigkelt an der Wasserturbine eintritt. Mit einem Pfeil ist der Übergang von der Kennkurve V₁ auf V₂ vom Arbeitspunkt B auf den Arbeitspunkt E skizziert, Dieser tritt unter Annahme ein, dass zunächst ein unverändertes Lastmoment M₁ vom elektrischen Generator 3 erzeugt wird. Das bei der Drehzahl n₁ von der Wasserturbine 2 aufgenommene hydrodynamische Moment wird dann anfangs das Lastmoment übersteigen, sodass die umlaufende Einheit beschleunigt, bis bei der Drehzahl n₂ ein neues Momentengleichgewicht erreicht ist. Vom Arbeitspunkt E ausgehend wird der MPP-Regler In der Folge einen im zeitlichen Verlauf zunehmenden Sollwert für das Lastmoment ausgeben, sodass ein neuer leistungsoptimaler Arbeitspunkt gefunden wird. Die Suchrichtung ist in Figur 2 durch einen Pfeil angedeutet, der zum lelstungsoptimalen Drehmoment 10 hinweist. Dabei wird die Leistungsregelung im ersten, leistungsoptimierten Betriebsbereich bei Turbinendrehzahlen ausgeführt, die größer sind als die dem Maximum des Turbinenmoments 9 zugeordneten Drehzahlen.

Für eine vorteilhafte Ausgestaltung umfasst das erfindungsgemäße Verfahren beziehungsweise die erfindungsgemäße Vorrichtung eine Möglichkeit zur Überwachung der Leistungserzeugung, um die Anwendung eines das Kippmoment an der Wasserturbine überschreitenden Lastmoments sicher zu verhindern. Dabei darf die Gesamtheit der bremsenden Momente das für die vorliegende Anströmungsgeschwindigkeit maximale Drehmoment nicht übersteigen. Ist dies dennoch kurzzeitig der Fall muss unmittelbar gegengesteuert werden, indem das Lastmoment am elektrischen Generator 3 abrupt abgesenkt wird, um den erneuten Hochlauf der Wasserturbine 2 sicherzustellen.

Um die Leistungsregelung im voranstehend genannten Drehzahlbereich bei einer ansonsten sich frei einstellenden Drehzahl sicherzustellen, umfasst das erfindungsgemäße Verfahren folgende Schritte zur Aktivierung des Unterwasserkraftwerks 1 aus dem Stillstand oder dem Leerlaufbetrieb. Dabei wird zunächst eine Anlaufphase durchlaufen, in der die Wasserturbine 2 hochgefahren und bis in den Schnelllaufbereich beschleunigt wird. Hierzu ist exemplarisch in Figur 2 der Arbeitspunkt A skizziert. Vorteilhafterweise wird hierzu zunächst die Wasserturbine 2 durch den motorischen Betrieb des elektrischen Generators 3 angetrieben und erst oberhalb eines bestimmten Drehzahlgradienten das Hochlaufen ausschließlich durch das von der Wasserturbine 2 aufgenommene hydrodynamische Moment bewirkt. Bevorzugt wird das Hochlaufen der Wasserturbine 2 so weit ausgeführt, dass der Drehzahlgradient zunächst unterhalb eines Schwellwerts fällt, bevor die Anlaufphase beendet wird und der Übergang zum ersten, lelstungsoptimlerten Betriebsbereich erfolgt. Hierdurch kann die Wasserturbine 2 bis nahe an die Durchgangsdrehzahl geführt werden, wobei aus der so erreichten Turblnendrehzahl auf die antreibende Strömungsgeschwindigkeit geschlossen werden kann. Entsprechend lässt sich ein erster Schätzwert für das leistungsoptimale Lastmoment für den sodann in Wirkung tretenden MPP-Regler festlegen, der die Wasserturbine 2 durch das Anlegen einer Generatorlast abbremst und zum leistungsoptimalen Arbeitspunkt führt.

Ferner ist in Figur 2 strichpunktiert das im zweiten, leistungsbegrenzten Betriebsbereich vorgegebene Lastmoment zur Abregelung 11 dargestellt. Dabei erfolgt die Umschaltung zwischen den Betriebsbereichen beim Erreichen der Anlagennennleistung. Sodann wird bevorzugt das Lastmoment am elektrischen Generator reduziert. Exemplarisch ist hierzu in Figur 2 der Arbeitspunkt F skizziert. Entsprechend wird die umlaufende Einheit des Unterwasserkraftwerks 1 beschleunigt, bis die Wasserturbine 2 im Schnelllaufbereich ein reduziertes hydrodynamisches Moment aufnimmt, das ein Momentengleichgewicht zum eingeprägten Lastmoment erzeugt.

Ferner besteht gemäß einer vorteilhaften Ausgestaltung der Erfindung eine Möglichkeit zur Überwachung einer zu geringen Anströmung, die nicht effizient zur Gewinnung elektrischer Energie ausgenutzt werden kann. Für diesen Fall wird insbesondere zur Schonung der Lagerkomponenten des Unterwasserkraftwerks 1 die Anlage stillgesetzt. Hierzu wird das Lastmoment über das Kippmoment der Wasserturbine 2 hinaus erhöht.

Weitere Ausgestaltungen der Erfindung sind denkbar. Dabei kann insbesondere das Lastmoment am elektrischen Generator 3 auf unterschiedliche Art und Weise eingestellt werden. Ferner besteht die Möglichkeit, wenigstens kurzzeitig, die Wasserturbine 2 durch ein Übermoment am elektrischen Generator 3 zu verzögern, etwa um nach dem Anlagenstart den leistungsoptimalen Betriebspunkt möglichst schnell anfahren zu können,

### Bezugszeichenliste

- 1: Unterwasserkraftwerk
- 2: Wasserturbine
- 3: elektrischer Generator
- 4: Verbundnetz
- 5: Frequenzumrichter
- 6: generatorseitiger Umrichter
- 7: Glelchspannungszwischenkrels
- 8: netzseitiger Umrichter
- 9: Maximum des Turbinenmoments
- 10: leistungsoptimales Drehmoment
- 11: Lastmoment zur Abregelung
- 12: erster Regler
- 13: zweiter Regler
- 14: Einrichtung zur Suche des Leistungsmaximums

## Patentansprüche

1. Verfahren zum Betrieb eines Unterwasserkraftwerks (1) mit
einer Wasserturbine (2) zur Aufnahme kinetischer Energie aus einer Umgebungsströmung; und
einem direkt an die Wasserturbine (2) gekoppelten elektrischen Generator (3); **dadurch gekennzeichnet, dass**
die Leistungsregelung im generatorischen Betrieb durch eine Steuerung oder Regelung des vom elektrischen Generator (3) erzeugten Lastmoments bei einer sich frei einstellenden Drehzahl der Wasserturbine (2) erfolgt,
wobei in einem ersten Betriebsbereich der Sollwert des Lastmoments (Mₛₒₗₗ) durch einen Zustandsregler und/oder eine andere Einrichtung zur Suche des Leistungsmaximums (14) bei vorliegender Anströmungsgeschwindigkeit, das gleichzeitig das Maximum des hydrodynamischen Moment (9) darstellt, festgelegt wird; und
in einem zweiten, leistungsbegrenzten Betriebsbereich das vorgegebene Lastmoment so gewählt ist, dass sich für die Wasserturbine (2) ein vom Leistungsmaximum entfernter Arbeitspunkt ergibt, der gegenüber den Leistungsmaximum zu höheren Drehzahlen hin verlagert ist (10).

2. Verfahren nach Anspruch 1, **dadurch gekennzeichnet, dass** die Einrichtung zur Suche des Leistungsmaximums (14) einen MPP-Regler umfasst, der zur Maximierung der Ausgangsleistung des elektrischen Generators (3) einen zeitlich variierenden Sollwert für das Lastmoment (Mₛₒₗₗ) vorgibt.

3. Verfahren nach einem der Ansprüche 1 oder 2, **dadurch gekennzeichnet, dass** als elektrischer Generator (3) eine permanentmagneterregte Synchronmaschine verwendet wird und das Lastmoment durch eine Regelung oder Steuerung der Statorspannung im 2-Achsensystem der Synchronmaschine bewirkt wird.

4. Verfahren nach einem der Ansprüche 1 oder 2, **dadurch gekennzeichnet, dass** dem elektrischen Generator (3) ein Frequenzumrichter (5) zugeordnet ist, der der Einspeisung elektrischer Leistung in ein Verbundnetz (4) mit fester Frequenz dient, wobei das Lastmoment des elektrischen Generators (3) durch den Frequenzumrichter (5) festgelegt wird.

5. Verfahren nach Anspruch 4, **dadurch gekennzeichnet, dass** der Frequenzumrichter (5) einen generatorseitigen Umrichter (6), einen Gleichspannungszwischenkreis (7) und einen netzseitigen Umrichter (8) umfasst, wobei die Umrichter (6, 7) unabhängig voneinander arbeiten und der generatorseitige Umrichter (6) das Lastmoment am elektrischen Generator (3) festlegt und der netzseitige Umrichter (8) die Spannung im Gleichspannungszwischenkreis (7) stabilisiert.

6. Verfahren nach Anspruch 5, **dadurch gekennzeichnet, dass** zur Bestimmung der Ausgabeleistung (P) des elektrischen Generators (3) das Produkt aus Zwischenkreisspannung und Laststrom im Gleichspannungszwischenkreis (7) gebildet wird.

7. Verfahren nach Anspruch 5, **dadurch gekennzeichnet, dass** zur Bestimmung der Ausgabeleistung (P) des elektrischen Generators (3) das Produkt aus Generatormoment und Generatordrehzahl mittels des generatorseitigen Umrichters (6) bestimmt wird.

8. Verfahren nach einem der Ansprüche 1 oder 2, **dadurch gekennzeichnet, dass** das zeitlich variierende Lastmoment einen oszillierenden Lastanteil aufweist.

9. Verfahren nach einem der Ansprüche 1 oder 2, **dadurch gekennzeichnet, dass** in einem dritten Betriebsbereich, der der Aktivierung des Unterwasserkraftwerks (1) aus dem Stillstand oder dem Leerlaufbetrieb

10. Verfahren nach Anspruch 9, **dadurch gekennzeichnet, dass** zu Beginn der Anlaufphase die Wasserturbine (2) mittels des elektrischen Generators (3) im motorischen Betrieb beschleunigt wird und beim Überschreiten eines Schwellwerts für den Drehzahlgradienten der motorische Antrieb durch den elektrischen Generator (3) wegfällt und der Drehzahlhochlauf ausschließlich durch das von der Wasserturbine (2) aufgenommene hydrodynamische Moment bewirkt wird.

11. Verfahren nach Anspruch 10, **dadurch gekennzeichnet, dass** die Anlaufphase so lange beibehalten wird, bis der Drehzahlgradient des durch das hydrodynamische Moment bewirkte Hochlaufen einen vorgegebenen Minimalwert unterschreitet, der so gewählt ist, dass die Wasserturbine (2) bis nahe an die Durchgangsdrehzahl geführt wird.

12. Verfahren nach Anspruch 11, **dadurch gekennzeichnet, dass** die am Ende der Anlaufphase erreichte Drehzahl der Wasserturbine (2) zur Bestimmung eines ersten Schätzwerts für das leistungsoptimale Lastmoment herangezogen wird.

13. Verfahren nach einem der Ansprüche 1 oder 2, **dadurch gekennzeichnet, dass** der Fall eines zu groß gewählten Lastmoments diagnostiziert wird, welches das Kippmoment der Wasserturbine (2) überschreitet, und sodann das Lastmoment am elektrischen Generator (3) sprunghaft reduziert wird.

14. Verfahren nach einem der vorausgehenden Ansprüche, **dadurch gekennzeichnet, dass** das Verfahren im ersten, leistungsoptimierten Betriebsbereich die Anlage dann stillsetzt, wenn der Sollwert des Lastmoments ein vorgegebenes Minimalmoment unterschreitet.

## Claims

1. A method for operating an underwater power station (1) having a water turbine (2) for absorbing kinetic energy from a surrounding current; and
an electric generator (3) directly coupled to the water turbine (2);
**characterised in that** the power is regulated in a generator operation by controlling or regulating the load torque generated by the electric generator (3) when the rotational speed of the water turbine (2) can be adjusted freely,
where in a first operating range the reference value of the load torque (Mson) can be defined by a status controller and/or another device to look for the power maximum (14) with the present inflow speed, a maximum which represents simultaneously the maximum of the hydrodynamic torque (9); and
in a second power-limited operating range the preset load torque is selected in such a way that there is a working point removed from the power maximum for the water turbine (2), a working point which is shifted (10) towards higher rotational speeds with respect to the power maximum.

2. The method of claim 1, **characterised in that** the device to look for the power maximum (14) includes an MPP regulator, which provides a reference value varying temporally for the load torque (Mosn) to maximise the output capacity of the electric generator (3).

3. The method according to any of the claims 1 or 2, **characterised in that** a synchronous machine excited by a permanent magnet is used as an electric generator (3) and the load torque is produced by regulating or controlling the stator voltage in the 2-axis system.

4. The method according to any of the claims 1 or 2, **characterised in that** a frequency inverter (5) is allocated to the electric generator (3) which inverter is used for feeding electric power into a national grid (4) at a fixed frequency, whereas the load torque of the electric generator (3) is defined by the frequency inverter (5).

5. The method of claim 4, **characterised in that** the frequency inverter (5) includes a inverter (6) on the generator side, an intermediate DC circuit (7) and an inverter (8) on the network side, whereas the inverters (6, 7) work independently of each other and the inverter (6) on the generator side defines the load torque on the electric generator (3) and the inverter (8) on the network side stabilises the voltage in the intermediate DC circuit (7).

6. The method of claim 5, **characterised in that** the product of intermediate circuit voltage and load current is calculated to determine the output power (P) of the electric generator (3).

7. The method of claim 5, **characterised in that** the product of generator torque and generator rotational speed is calculated by means of the inverter (6) on the generator side, to determine the output power (P) of the electric generator (3).

8. The method according to any of the claims 1 or 2, **characterised in that** the load torque varying temporarily has an oscillating load share.

9. The method according to any of the claims 1 or 2, **characterised in that** in a third operating range, which is used for activating the underwater power station (1) from standstill or idle mode, the water turbine (2) is accelerated first of all in a startup phase until it reaches the high-speed range, before transition to the first operating range with optimised power.

10. The method according to claim 9, **characterised in that** the water turbine (2) is accelerated by means of the electric generator (3) in motor operation at the beginning of the startup phase and the motorised drive provided by the electric generator (3) is cancelled when a threshold value is exceeded for the rotational speed gradient and the rotational speed buildup is produced exclusively by the hydrodynamic torque absorbed by the water turbine (2).

11. The method according to claim 10, **characterised in that** the startup phase is maintained until the rotational speed gradient of the buildup actuated by the hydrodynamic torque falls below a predetermined minimum value, which is selected in such a way that the water turbine (2) is run close to the runaway speed.

12. The method according to claim 11, **characterised in that** the rotational speed of the water turbine (2) achieved at the end of the startup phase is used to determine a first estimated value for the load torque with optimum power.

13. The method according to any of the claims 1 or 2, **characterised in that** the case of a load torque selected too high is diagnosed which exceeds the breakdown torque of the water turbine (2) and consequently the load torque on the electric generator (3) is reduced by leaps and bounds.

14. The method according to one of the previous claims, **characterised in that** the method shuts down the installation in the first operating range with optimised power when the reference value of the load torque falls below a preset minimum torque.

## Revendications

1. Procédé d'exploitation d'une centrale immergée (1) comportant une turbine à eau (2) permettant d'absorber l'énergie cinétique provenant d'un courant environnant ; et
un générateur électrique (3) couplé directement à la turbine à eau (2) ;
**caractérisé en ce que** la puissance est régulée pendant le fonctionnement sur générateur en commandant ou régulant le couple de charge produit par le générateur électrique (3) lorsque la vitesse de rotation de la turbine à eau (2) s'établit librement,
où dans une première plage d'exploitation, la valeur de consigne du couple de charge (Mson) est définie par un régulateur de statut et/ou un autre dispositif permettant de rechercher la puissance maximale (14) en présence de la vitesse de circulation, puissance maximale représentant simultanément le maximum du couple hydrodynamique (9) ; et
dans une seconde plage d'exploitation limitée en puissance le couple de charge prédéterminé est choisi de telle sorte que l'on obtient un point de travail éloigné de la puissance maximale pour la turbine à eau (2), point de travail qui se décale (10) vers des vitesses de rotation plus élevées par rapport à la puissance maximale.

2. Procédé selon la revendication 1, **caractérisé en ce que** le dispositif de recherche de la puissance maximale (14) comporte un régulateur MPP qui génère une valeur de consigne variable dans le temps pour le couple de charge (Mson) pour maximiser la puissance de sortie du générateur électrique (3).

3. Procédé selon l'une des revendications 1 ou 2, **caractérisé en ce que** l'on utilise comme générateur électrique (3) une machine synchrone excitée par un aimant permanent et que l'on produit le couple de charge par régulation ou contrôle de la tension stator dans le système à deux axes de la machine synchrone.

4. Procédé selon l'une des revendications 1 ou 2, **caractérisé en ce qu'**un convertisseur de fréquence (5) est affecté au générateur électrique (3) convertisseur assurant l'alimentation électrique à une fréquence fixe dans un réseau interconnecté (4), où le couple de charge du générateur électrique (3) est défini par le convertisseur de fréquence (5).

5. Procédé selon la revendication 4, **caractérisé en ce que** le convertisseur de fréquence (5) comprend un convertisseur (6) côté générateur, un circuit intermédiaire à courant continu (7) et un convertisseur (8) côté réseau, où les convertisseurs fonctionnent (6, 7) indépendamment l'un de l'autre et le convertisseur (6) côté générateur définit le couple de charge au niveau du générateur électrique (3) et le convertisseur (8) côté réseau stabilise la tension dans le circuit intermédiaire à courant continu (7).

6. Procédé selon la revendication 5, **caractérisé en ce que** l'on calcule le produit de la tension de circuit intermédiaire et du courant de charge dans le circuit intermédiaire à courant continu (7) pour déterminer la puissance de sortie (P) du générateur électrique (3).

7. Procédé selon la revendication 5, **caractérisé en ce que** l'on calcule le produit du couple de générateur et de la vitesse de rotation du générateur à l'aide du convertisseur côté générateur pour définir la puissance de sortie (P) du générateur électrique (3).

8. Procédé selon l'une des revendications 1 ou 2, **caractérisé en ce que** le couple de charge variable dans le temps présente une part de charge oscillante.

9. Procédé selon l'une des revendications 1 ou 2, **caractérisé en ce que** dans une troisième plage d'exploitation, servant à l'activation de la centrale immergée (1) à partir de l'arrêt ou du ralenti, la turbine à eau (2) accélère dans un premier temps pour atteindre la plage de vitesse élevée avant la transition vers la première plage d'exploitation de puissance optimisée.

10. Procédé selon la revendication 9, **caractérisé en ce que** la turbine à eau (2) va accélérer à l'aide du générateur électrique (3) en fonctionnement sur moteur au début de la phase de démarrage et l'entraînement motorisé est arrêté par le générateur électrique (3) en cas de dépassement d'un seuil pour le gradient de vitesse de rotation et l'emballement de la vitesse de rotation est provoqué exclusivement par le couple hydrodynamique absorbé par la turbine à eau (2).

11. Procédé selon la revendication 10, **caractérisé en ce que** l'on maintient la phase de démarrage jusqu'à ce que le gradient de vitesse de rotation de l'emballement provoqué par le couple hydrodynamique tombe au-dessous d'une valeur minimale prédéterminée, valeur que l'on choisit pour que la turbine à eau (2) se rapproche de la vitesse d'emballement.

12. Procédé selon la revendication 11, **caractérisé en ce que** l'on utilise la vitesse de rotation de la turbine à eau (2) obtenue au terme de la phase de démarrage pour déterminer une première estimation du couple de charge de puissance optimale.

13. Procédé selon l'une des revendications 1 ou 2, **caractérisé en ce que** l'on diagnostique le cas d'un couple de charge choisi trop élevé, couple qui dépasse le couple de basculement de la turbine à eau (2) et a ainsi pour effet de réduire par saccades le couple de charge au niveau du générateur électrique (3).

14. Procédé selon l'une quelconque des revendications précédentes, **caractérisé en ce que** le procédé met l'installation à l'arrêt dans la première plage d'exploitation de puissance optimisée lorsque la valeur de consigne du couple de charge tombe au-dessous d'un couple minimal prédéterminé.
